# EUROPEAN PATENT APPLICATION

(11) **EP 0 663 468 A1**
(43) Date of publication of application: **19.07.1995**
(21) Application number: 94120717.7
(22) Date of filing: 27.12.1994
(51) Int. Cl.: D06N 3/12, D06M 15/643, B60R 21/16

(54) **Silicone rubber-coated air bag**

(30) Priority: 28.12.1993 JP 354247/93
(71) Applicant: Dow Corning Toray Silicone Company, Limited, Tokyo 103 (JP)
(72) Inventor: Honam, Hiroshi, Dow Corning Toray Silic. Co., Ltd., Ichihara-shi, Chiba Prefecture (JP); Matsuhita, Takao, Dow Corning Toray Silic. Co. Ltd, Ichihara-shi, Chiba Prefecture (JP); Ohta, Kenji, Dow Corning Toray Silic. Co. Ltd, Ichihara-shi, Chiba Prefecture (JP)
(74) Representative: Spott, Gottfried, Dr.

(57) **Abstract**

A silicone rubber-coated air bag cloth which has excellent pliability and flame resistance in spite of the coating amount of the silicone rubber being less than used in previous processes. The silicone rubber-coated air bag cloth is characterized in that the silicone rubber composition comprises: (A) diorganopolysiloxane containing 2 or more alkenyl groups in a molecule, (B) fine powder silica, (C) platinum or platinum compound, (D) organopolysiloxane resin which contains siloxane unit expressed by the formula : RSiO_{3/2} (where R is a substituted or unsubstituted monovalent hydrocarbon group) and/or siloxane unit expressed by the formula : SiO_{4/2} in a molecule, and (E) organic peroxide, or organohydrogenpolysiloxane containing 3 or more silicon atom bonded hydrogen atoms in a molecule, is coated on synthetic fiber cloth in an amount less than 40 g/m² and cured.

## Description

This invention is pertinent to a silicone rubber-coated air bag cloth. More specifically, it is pertinent to silicone rubber-coated air bag cloth which has excellent pliability and flame resistance.

The air bag made of silicone rubber-coated cloth, for which the base cloth of polyamide fiber (nylon 66 fiber) is coated with silicone rubber, has been put to practical use, and it is almost replacing the conventional air bag made of chloroprene rubber-coated cloth. As a silicone rubber coating agent for this kind of air bag, the present inventors proposed previously a silicone rubber composition consisting of alkenyl group-containing organopolysiloxane, fine powder silica, epoxy group-containing organic silicon compound, and curing agent (refer to JP-A 5-25435). However, the progress of this area is astonishing, and it is said that the non-coated cloth is going to be the main stream of the next generation air bag. But because the air bag of non-coated cloth has problems in pliability and flame resistance in the base cloth, fabric raveling upon cutting, etc., and also there are many other problems to be solved, it has not been put to practical use yet. Meantime, for the current silicone rubber-coated cloth, studies have been conducted to reduce the coating amount of silicone rubber. However, there has been a problem of drastic degradation of flame resistance of the silicone rubber-coated cloth when the coating amount of silicone rubber is reduced (The coating amount of silicone rubber of the current silicone rubber-coated air bag cloth is greater than 50 g/m².). This is because, when the coating amount of silicone rubber is greater, the combustibility of the base cloth made of polyamide fiber can be suppressed by the self-extinguishing characteristics of the silicone rubber, but when the coating amount of the silicone rubber becomes less, the combustibility of the base cloth made of polyamide fiber cannot be suppressed anymore by the self-extinguishing characteristics of the silicone rubber.

The present inventors made intensive studies to solve these problems and reached the present invention. Namely, the objective of the present invention is to present a silicone rubber-coated air bag cloth having excellent pliability and flame resistance in spite of the coating amount of the silicone rubber being less than that of conventional ones.

A silicone rubber-coated air bag cloth consisting of constituents (A) through constituent (E), where the constituent (D) is an organopolysiloxane resin, is coated on synthetic fiber cloth to an amount less than 40 g/m² and cured. The resulting silicone rubber-coated air bag cloth has excellent pliability and excellent flame resistance in spite of the coating amount of the silicone rubber composition being less than that of conventional processes.

The present invention is a silicone rubber-coated air bag cloth in which a silicone rubber composition consisting of the following is coated at less than 40 g/m² on synthetic fiber cloth and cured:
(A) 100 parts by weight of diorganopolysiloxane containing 2 or more alkenyl groups in a molecule
(B) 5 to 100 parts by weight fine powder silica
(C) platinum or platinum compound providing 1 to 1000 parts by weight platinum atoms per 1 million parts by weight of constituent (A),
(D) 1 to 100 parts by weight of an organopolysiloxane resin which contains siloxane units described by formula RSiO_{3/2}, where R is a substituted or unsubstituted monovalent hydrocarbon group, and/or siloxane units expressed by the formula SiO_{4/2} in a molecule, and
(E) organic peroxide or organohydrogenpolysiloxane containing 3 or more silicon atom bonded hydrogen atoms in a molecule in an amount sufficient to cure the silicone rubber composition.

The silicone rubber composition of the present invention can be explained as a composition to make a synthetic fiber cloth suitable to be used in an air bag application by adding pliability and flame resistance to it.

The constituent (A) of the silicone rubber composition, diorganopolysiloxane, is the major constituent of this composition, and is required to contain two or more alkenyl groups in a molecule. A representative example of such diorganopolysiloxane can be essentially straight chain organopolysiloxanes described by the general formula :
R'ₙSiO_{(4-n)/2}. In this formula, R' is a substituted or unsubstituted monovalent hydrocarbon group which can be an alkyl group such as methyl, ethyl, propyl, etc.; aryl group such as phenyl, etc.; or halogen substituted alkyl group such as 3,3,3-trifluoropropyl, etc., and n is a number in the range of 1.9 to 2.1. The viscosity of this constituent is preferably higher than 100 centistoke at 25°C, and more preferably higher than 5,000 centistoke taking the strength of the silicone rubber coat and the workability for compounding, etc. into consideration. Specifically such a constituent can be dimethylvinylsiloxy-capped dimethylsiloxane-methylvinylsiloxane copolymer, dimethylvinylsiloxy-capped dimethylsiloxane-methyphenylsiloxane copolymer, trimethylsiloxy-capped dimethylsiloxane-methylvinylsiloxane copolymer, or dimethylvinylsiloxy-capped dimethylpolysiloxane.

The constituent (B), fine powder silica, functions to improve the mechanical strength of the silicone rubber coat. For this constituent, known fine powder silica, which has been used previously as the reinforcing filler for the silicone rubber composition, can be used, for example, dry method silica, and precipitation method silica. Among those, preferred are ultra fine power silica of particle size less than 50 millimicrons and specific surface area greater than 50 m²/g, or fine powder silica of which the surface is hydrophobicized in advance with, for example, organosilane, organosilazane, and diorganocyclopolysiloxane. The compounding amount of this constituent is 5 to 100 parts by weight per 100 parts by weight constituent (A).

The constituent (C), platinum or platinum compound, can be platinum fine powder, platinum black, chloroplatinic acid, olefin complex of chloroplatinic acid, and a complex of chloroplatinic acid and methylvinylsiloxane. The amount of this constituent added to the present composition is 1 to 1000 parts by weight as platinum atom, and preferably 1-100 parts by weight per 1 million parts by weight of constituent (A).

The constituent (D), organopolysiloxane resin, is the constituent important to add flame resistance to the silicone rubber coat, and is required to contain siloxane units described by formula : RSiO_{3/2} and/or siloxane units described by formula : SiO_{4/2} in a molecule. In the above formula, R is a substituted or unsubstituted monovalent hydrocarbon group, which can be an alkyl group such as methyl, ethyl, propyl, etc.; an alkenyl group such as vinyl, allyl, etc.; an aryl group such as phenyl, etc.. Siloxane units other than those described by the above formulas can also be present in the organopolysiloxane resin, including siloxane units described by formula : R₃SiO_{1/2}, and siloxane units described by formula : R₂SiO_{2/2}. In these formulas, R is the same as described above. Specific examples of constituent (D) can be methylpolysiloxane resin consisting of siloxane units described by the formula : (CH₃)₃SiO_{1/2} and siloxane units described by formula : SiO_{4/2}; methylpolysiloxane resin consisting of siloxane units described by formula : (CH₃)₃SiO_{1/2}, siloxane units described by formula : (CH₃)SiO_{3/2}, and siloxane units described by formula : SiO_{4/2}; methylvinylpolysiloxane resin consisting of siloxane units described by formula : (CH₃)₃SiO_{1/2}, siloxane units described by formula : (CH₃)₂ViSiO_{1/2} (in the formula, Vi is a vinyl group), and siloxane units described by formula : SiO_{4/2}; phenylpolysiloxane resin consisting of siloxane units described by formula : PhSiO_{3/2} (in the formula, Ph is a phenyl group) and siloxane units described by formula : (CH₃)₂SiO_{2/2}; and phenylvinylpolysiloxane resin consisting of siloxane units described by formula : PhSiO_{3/2} and siloxane units described by formula : (CH₃)ViSiO_{2/2}, etc.. The compounding amount of constituent (D) is 1 to 100 parts by weight per 100 parts by weight of constituent (A).

The constituent (E), organic peroxide or organohydrogenpolysiloxane, is the constituent to cure the silicone rubber composition.

The former, organic peroxide, is a curing agent, which can be, for example, benzoyl peroxide, 2,4-dichlorobenzoyl peroxide, p-chlorobenzoyl peroxide, or o-chlorobenzoyl peroxide. The compounding amount of this organic peroxide should be enough to cure the silicone rubber composition and usually 0.1 to 5 parts by weight per 100 parts by weight of constituent (A).

The latter, organohydrogenpolysiloxane, is a bridging agent and is required to contain 3 or more silicon atom-bonded hydrogen atoms in a molecule. Such organohydrogenpolysiloxane can be trimethylsiloxy-capped methylhydrogenpolysiloxane, trimethylsiloxy-capped dimethylsiloxane-methylhydrogensiloxane copolymer, or cyclic methylhydrogenpolysiloxane. Also, it can be organohydrogenpolysiloxane containing trialkoxysilyl group which is bonded to silicon atom via divalent hydrocarbon group, and epoxy group-containing monovalent organic group such as glycidoxypropyl group, epoxycyclohexylethyl group, etc.. Among these, the latter organohydrogenpolysiloxane, which has trialkoxysilyl group and epoxy group-containing monovalent organic group, is preferably used since it functions not only as a bridging agent but also functions to improve the adhesion of silicone rubber composition to the synthetic fiber base cloth. Such a compound can be methylhydrogensiloxane-dimethylsiloxane copolymer containing methyl(trimethoxysilylpropyl)siloxane unit and γ-glycidoxypropylmethylsiloxane unit. Also, two or more kinds of organohydrogenpolysiloxane can be compounded. The compounding amount of this organohydrogenpolysiloxane should be enough to cure the silicone rubber composition, and in cases where the organohydrogenpolysiloxane containing trialkoxysilyl group, which is bonded to silicon atom via divalent hydrocarbon group and epoxy group-containing monovalent organic group, are used, it should preferably be 0.1 to 10 parts by weight per 100 parts by weight of constituent (A).

The constituent (E) is organic peroxide or organohydrogenpolysiloxane as described above, and they can be used either individually or both together.

Although the silicone rubber composition used in the present invention is the one consisting of the constituent (A) through constituent (E), carbon black can be compounded as a constituent (F) in addition to the above constituents. When carbon black is compounded, flame resistance of the silicone rubber-coated air bag cloth in the present invention is further improved. Such carbon black can be a known carbon black such as furnace black, acetylene black, channel black, etc., which has been conventionally compounded in silicone rubber compositions. The compounding amount of this constituent is 0.1 to 50 parts by weight per 100 parts by weight of constituent (A).

Although the silicone rubber composition used in the present invention is the one consisting of constituent (A) through constituent (E), or constituent (A) through constituent (F), an organic solvent can be compounded as a constituent (G) in addition to the above constituents. This organic solvent is a diluent of the silicone rubber composition used in the present invention, and when this is used, it becomes easier to coat the silicone rubber composition on a synthetic fiber base cloth. Such organic solvent can be, for example, xylene, toluene, benzene, hexane, and heptane.

As long as the objective of the present invention is not impaired, it is acceptable to add, other than the above constituents, an adhesion promoter such as dimethylpolysiloxane containing epoxy group-containing monovalent organic group and trialkoxysilyl group bonded to silicon atom via divalent hydrocarbon group, methylvinylpolysiloxane containing epoxy group-containing monovalent organic group and trialkoxysilyl group bonded to silicon atom via divalent hydrocarbon group, dimethylpolysiloxane-methylvinylsiloxane copolymer containing epoxy group-containing monovalent organic group and trialkoxysilyl group bonded to silicon atom via divalent hydrocarbon group, γ-glycidoxypropyltrimethoxysilane, β-(3,4-epoxycyclohexyl)ethyltrimethoxysilane, etc., and a small amount of various additives previously known to be additives to the silicone rubber compositions, for example, heat-resisting agents such as iron oxide red, rare earth oxides, cerium silanolate, etc., and platinum reaction inhibitors such as acetylenic alcohols, etc..

The silicone rubber composition used in the present invention can be manufactured easily by uniformly mixing constituent (A) through constituent (E), constituent (A) through constituent (F), or constituent (A) through constituent (G) as described above, using mixing equipment such as a two roll kneader-mixer, pressure kneader-mixer, Ross mixer, etc.. In the above process, it is common to add and mix the constituent (E) after constituent (A) through constituent (D) are mixed, or after the constituent (A), the constituent (B), the constituent (C), the constituent (D), and the constituent (F) are mixed.

The silicone rubber-coated air bag cloth in the present invention is prepared by coating synthetic fiber base cloth with the above silicone rubber composition in an amount less than 40 g/m² and curing it. This is because, when the amount of the silicone rubber composition exceeds 40 g/m², its pliability is reduced, and also using greater amount of the expensive silicone rubber composition is of disadvantage in its cost. Upon coating the synthetic fiber base cloth with the silicone rubber composition, it is preferable to adjust the viscosity by dissolving the silicone rubber composition in the constituent (G), organic solvent, so that the coating can be performed easily. After the silicone rubber composition is coated onto the cloth, the coated cloth is heat-treated under temperature condition sufficient to cure the silicone rubber composition, for example, under the temperature condition of 100-160°C.

The synthetic fiber base cloth used in the present invention can be fabrics made of, for example, polyamide fiber such as nylon 6, 66, 46, etc.; aramid fiber such as the copolymer of paraphenyleneterephthalamide and aromatic ether, etc.; polyester fiber such as polyalkyleneterephthalate, etc.; all aromatic polyester fibers; vinylon fiber; rayon fiber; polyolefin fiber such as super high molecular weight polyethylene; polyoxymethylene fiber; sulfone fiber such as paraphenylenesulfone, polysulfone, etc.; polyetherimide fiber; carbon fiber and so forth, and among these, the fabric made of polyamide fiber and the fabric made of polyester fiber are representative.

As described above, the silicone rubber-coated air bag cloth of the present invention has excellent pliability and in spite of the coating amount of the silicone rubber composition being less than 40 g/m², it has excellent flame resistance. This flame resistance passes FMVSS-302 (Federal Motor Vehicle Safety Standard-302).

The present invention is further explained by Examples provided below. In the Examples, parts means parts by weight, viscosity is the value at 25°C, and cSt indicates centistoke. For the evaluation of flame resistance of the silicone rubber-coated air bag cloth, the method specified in FMVSS-302 was followed and the burning distance, burning time, and burning velocity were measured.

For determining the burning distance, the coated surface of the sample (10 cm wide × 35 cm long) was placed on top, and it was burnt by following the method specified in FMVSS-302, and the distance burnt (cm) before the flame died out was measured. Burning down means the distance between 2 points A and B (25 cm) was burnt out. The burning time is the time (seconds) from the moment the flame reached the point A to the moment it died out.

Example 1. 100 parts of a gum comprising dimethylvinylsiloxy-capped dimethylsiloxane-methylvinylsiloxane copolymer with a degree of polymerization of 3,000 and consisting of 99.85 mole % dimethylsiloxane units and 0.15 mole % methylvinylsiloxane units; 14 parts of silanol-capped dimethylpolysiloxane with a viscosity of 60 cSt; and 50 parts dry process silica with a specific surface area of 200 m²/g, were loaded into a kneader-mixer and kneaded under elevated temperature until the mixture became uniform, and a silicone rubber base was obtained. To this rubber base, 0.5 parts of a 1 weight % isopropyl alcohol solution of chloroplatinic acid and an organopolysiloxane resin as described below were added and kneaded on a 2 roll mill, and a silicone rubber compound was obtained. 30 parts of this silicone rubber compound was dissolved in 70 parts toluene by stirring at room temperature. To 100 parts of this toluene solution 3 parts of a 50 weight % silicone oil paste of 2,4-dichlorobenzoyl peroxide was added, and a toluene solution of the silicone rubber composition was prepared.

The toluene solution of the silicone rubber composition thus obtained was coated on nylon 66 fabric (420 deniers) using a coater. In this process, the coating amount of the silicone rubber composition was adjusted to coat 20 g/m². Subsequently, after this coated cloth was air-dried at 90°C for 2 minutes, by curing it at 120°C for 5 minutes, a silicone rubber-coated air bag cloth was fabricated. Flame resistance of the fabricated cloth was measured by the method specified in FMVSS-302. The results are given in Table 1.

Here, the organopolysiloxane resins used are as given in the following. Their compounding amounts are also given in Table 1.
(a) methylpolysiloxane resin consisting of 65 mole % siloxane units described by formula : (CH₃)₃SiO_{1/2} and 35 mole % siloxane units described by formula : SiO_{4/2}, and having a weight-average molecular weight of 4,000;
(b) methylvinylpolysiloxane resin consisting of 70 mole % siloxane units described by formula : (CH₃)₃SiO_{1/2} and siloxane units described by formula : SiO_{4/2} and containing 2 weight % vinyl group, and having a weight-average molecular weight of 4,000;
(c) phenylpolysiloxane resin consisting of 78 mole % siloxane units described by formula : PhSiO_{3/2} (in the formula, Ph is phenyl group) and 22 mole % siloxane units described by formula : (CH₃)₂SiO_{2/2}, and having a weight-average molecular weight of 3,000; and
(d) phenylvinylpolysiloxane resin consisting of 78 mole % siloxane units described by formula : PhSiO_{3/2} and 22 mole % siloxane units described by formula : CH₃ViSiO_{2/2} (in the formula, Vi is vinyl group), and having a weight-average molecular weight of 3,000.

Comparison example 1. A toluene solution of the silicone rubber composition was prepared by the same procedure as described in Example 1, except that the organopolysiloxane resin in Example 1 was not compounded. The toluene solution obtained was coated on nylon 66 fabric by the same method as described in Example 1. Subsequently, the coated fabric was heated and cured by the same method as described in Example 1 and a silicone rubber-coated air bag cloth was fabricated. Flame resistance of the fabricated cloth was measured by the method specified in FMVSS-302. The results are given in Table 1.

**TABLE 1**

| | Example 1 | | | | | | | | Comparison example 1 |
|---|---|---|---|---|---|---|---|---|---|
| Type polysiloxane resin | (a) | (a) | (b) | (b) | (c) | (c) | (d) | (d) | None |
| Amount (parts) | 10 | 20 | 10 | 20 | 10 | 20 | 10 | 20 | |
| Coating amount of silicone rubber (g/m²) | 18.0 | 18.5 | 18.4 | 18.1 | 18.5 | 18.7 | 18.4 | 18.1 | 18.4 |
| Burning distance (cm) | 25 | 25 | 25 | 25 | 25 | 25 | 25 | 25 | 25 |
| Burning time (sec) | 160 | 178 | 171 | 189 | 153 | 170 | 169 | 178 | 71 |
| Burning velocity (cm/min) | 9.4 | 8.4 | 8.8 | 7.9 | 9.8 | 8.8 | 8.9 | 8.4 | 21.1 |

Example 2. 100 parts of a gum comprising dimethylvinylsiloxy-capped dimethylsiloxane-methylvinylsiloxane copolymer with a degree of polymerization of 3,000 and consisting of 99.85 mole % dimethylsiloxane units and 0.15 mole percent methylvinylsiloxane units; 8.5 parts silanol-capped dimethylpolysiloxane with a viscosity of 60 cSt; and 50 parts dry process silica with a specific surface area of 100 m²/g which was hydrophobicized by treatment with dimethyldichlorosilane were loaded to a kneader-mixer and kneaded under elevated temperature until the mixture became uniform, and a silicone rubber base was obtained. To this rubber base, the organopolysiloxane resin used in Example 1 was added and kneaded on a 2 roll mill to obtain a silicone rubber compound. This silicone rubber compound, 30 parts, was dissolved in 70 parts toluene by stirring at room temperature. To 100 parts of this toluene solution, 1.0 part of a methylhydrogensiloxane-dimethylsiloxane copolymer described by the average molecular formula: 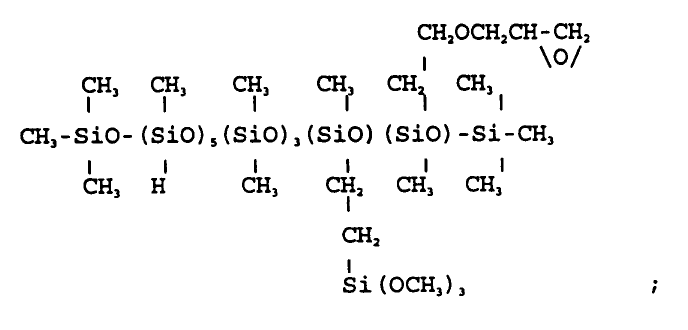
0.1 part trimethylsiloxy-capped methylhydrogenpolysiloxane with a viscosity of 30 cSt; 0.5 part of a complex of chloroplatinic acid and divinyltetramethyldisiloxane, 0.5 part (platinum atom concentration of 0.4 weight %); and 0.5 part of 3,5-dimethyl-1-hexyne-3-ol as a curing inhibitor were added, and a toluene solution of the silicone rubber composition was prepared. The toluene solution obtained was coated on nylon 66 fabric by the same method as described in Example 1. Subsequently, the coated fabric was heated and cured by the same method as described in Example 1 and a silicone rubber-coated air bag cloth was fabricated. Flame resistance of the fabricated cloth was measured by the method specified in FMVSS-302. The results are given in Table 2.

Comparison example 2. A toluene solution of the silicone rubber composition was prepared by the same procedure as Example 2 except that the organopolysiloxane resin in Example 2 was not compounded. The toluene solution obtained was coated on nylon 66 fabric by the same method as described in Example 2. Subsequently, the coated fabric was heated and cured by the same method as described in Example 2 and a silicone rubber-coated air bag cloth was fabricated. Flame resistance of the fabricated cloth was measured by the method specified in FMVSS-302. The results are given in Table 2.

**TABLE 2**

| | Example 2 | | | | | | | | Comparison example 2 |
|---|---|---|---|---|---|---|---|---|---|
| Type polysiloxane resin | (a) | (a) | (b) | (b) | (c) | (c) | (d) | (d) | None |
| Amount (parts) | 10 | 20 | 10 | 20 | 10 | 20 | 10 | 20 | |
| Coating amount of silicone rubber (g/m²) | 18.2 | 18.3 | 17.9 | 18.5 | 17.8 | 17.5 | 17.8 | 18.1 | 17.2 |
| Burning distance (cm) | 25 | 25 | 25 | 25 | 25 | 25 | 25 | 25 | 25 |
| Burning time (sec) | 174 | 195 | 189 | 208 | 163 | 180 | 184 | 191 | 82 |
| Burning velocity (cm/min) | 8.6 | 7.7 | 7.9 | 7.2 | 9.2 | 8.3 | 8.2 | 7.9 | 18.3 |

Example 3. A toluene solution of the silicone rubber composition was prepared by the same procedure as described in Example 2 except that 2.0 parts carbon black of a specific surface area of 70 m²/g was added at the same time when the organopolysiloxane resin as described in Example 2 was compounded. The toluene solution obtained was coated on nylon 66 fabric by the same method as described in Example 2. Subsequently, the coated cloth was heated and cured by the same method as described in Example 2 and a silicone rubber-coated air bag cloth was fabricated. Flame resistance of the fabricated cloth was measured by the method specified in FMVSS-302. The results are given in Table 3.

Comparison example 2. A toluene solution of the silicone rubber composition was prepared by the same procedure as described in Example 3 except that only 2.0 parts of carbon black of specific surface area 70 m²/g was compounded and the organopolysiloxane resin of Example 3 was not compounded. The toluene solution obtained was coated on nylon 66 fabric by the same method as described in Example 3. Subsequently, the coated cloth was heated and cured by the same method as described in Example 3 and a silicone rubber-coated air bag cloth was fabricated. Flame resistance of the fabricated cloth was measured by the method specified in FMVSS-302. The results are given in Table 3.

**TABLE 3**

| | Example 3 | | | | | | | | Comparison example 3 |
|---|---|---|---|---|---|---|---|---|---|
| Type polysiloxane resin | (a) | (a) | (b) | (b) | (c) | (c) | (d) | (d) | None |
| Amount (parts) | 10 | 20 | 10 | 20 | 10 | 20 | 10 | 20 | |
| Coating amount of silicone rubber (g/m²) | 17.1 | 17.3 | 17.6 | 17.9 | 17.6 | 18.2 | 17.4 | 17.9 | 17.7 |
| Burning distance (cm) | 19 | 16 | 18 | 13 | 22 | 18 | 17 | 15 | 25 |
| Burning time (sec) | 168 | 178 | 176 | 170 | 186 | 171 | 146 | 155 | 130 |
| Burning velocity (cm/min) | 6.8 | 5.4 | 6.1 | 4.6 | 7.1 | 6.3 | 7.0 | 5.8 | 11.5 |

## Claims

1. A silicone rubber composition for coating synthetic fiber cloth, the composition comprising:
(A) 100 parts by weight diorganopolysiloxane containing 2 or more alkenyl groups in a molecule,
(B) 5 to 100 parts by weight fine powder silica,
(C) platinum or platinum compound providing 1 to 1000 parts by weight platinum atoms per 1 million parts by weight of constituent (A),
(D) 1 to 100 parts by weight of an organopolysiloxane resin comprising siloxane units described by formula RSiO_{3/2}, where R is a substituted or unsubstituted monovalent hydrocarbon group, and/or siloxane units expressed by formula SiO_{4/2} in a molecule, and
(E) organic peroxide or organohydrogenpolysiloxane containing 3 or more silicon-bonded hydrogen atoms in a molecule in an amount sufficient to cure the silicone rubber composition.

2. A silicone rubber composition according to Claim 1, where the diorganopolysiloxane has a viscosity higher than 5,000 centistoke.

3. A silicone rubber composition according to Claim 1, where the non-alkenyl organic substitutions on the silicon atoms of the polyorganosiloxane are methyl.

4. A silicone rubber composition according to Claim 1, where the fine powder silica has a particle size less than 50 millimicrons and a specific surface area greater than 50 m²/g.

5. A silicone rubber composition according to Claim 4, where the fine powder silica is treated prior to addition to the composition to make it hydrophobic.

6. A silicone rubber composition according to Claim 1 comprising 1 to 100 parts by weight platinum atoms per 1 million parts by weight of constituent (A).

7. A silicone rubber composition according to Claim 1, where the organopolysiloxane resin comprises siloxane units described by formulas (CH₃)₃SiO_{1/2} and SiO_{4/2}.

8. A silicone rubber composition according to Claim 1, where the organopolysiloxane resin comprises siloxane units described by formulas (CH₃)₃SiO_{1/2}, (CH₃)SiO_{3/2}, and SiO_{4/2}.

9. A silicone rubber composition according to Claim 1, where the organopolysiloxane resin comprises siloxane units described by formulas (CH₃)₃SiO1/2, (CH₃)₂ViSiO_{1/2}, and SiO_{4/2}, were Vi is vinyl.

10. A silicone rubber composition according to Claim 1, where the organopolysiloxane resin comprises siloxane units described by formulas PhSiO_{3/2} and (CH₃)₂SiO_{2/2}, where Ph is phenyl.

11. A silicone rubber composition according to Claim 1, where the organopolysiloxane resin comprises siloxane units described by formulas PhSiO_{3/2} and (CH₃)ViSiO_{2/2}, where Ph is phenyl and Vi is vinyl.

12. A silicone rubber composition according to Claim 1, comprising 0.1 to 5 parts by weight per 100 parts by weight of constituent (A) of an organic peroxide selected from a group consisting of benzoyl peroxide, 2,4-dichlorobenzoyl peroxide, p-chlorobenzoyl peroxide, and o-chlorobenzoyl peroxide.

13. A silicone rubber composition according to Claim 1, where the organohydrogenpolysiloxane contains at least one trialkoxysilyl group bonded to a silicon atom via a divalent hydrocarbon group and at least one epoxy group-containing monovalent organic group.

14. A silicon rubber composition according to Claim 13, where the organohydrogenpolysiloxane is a methylhydrogensiloxane-dimethylsiloxane copolymer containing at least one methyl(trimethoxysilylpropyl)siloxane unit and at least one gamma-glycidoxypropylmethylsiloxane unit.

15. A silicon rubber composition according to Claim 1, further comprising (F) 0.1 to 50 parts by weight of carbon black per 100 parts by weight of constituent (A).

16. A silicon rubber composition according to Claim 1, further comprising (G) an organic solvent.

17. A silicone rubber composition according to Claim 15, further comprising (G) an organic solvent.

18. A silicone rubber composition according to Claim 1, further comprising an adhesion promoter.

19. A silicone rubber-coated synthetic fiber cloth comprising: a synthetic fiber cloth coated with less than 40 g/m² of a cured silicone rubber composition comprising
(A) 100 parts by weight of diorganopolysiloxane containing 2 or more alkenyl groups in a molecule,
(B) 5 to 100 parts by weight fine powder silica,
(C) platinum or platinum compound providing 1 to 1000 parts by weight platinum atoms per 1 million parts by weight of constituent (A),
(D) 1 to 100 parts by weight of an organopolysiloxane resin comprising siloxane units described by formula RSiO_{3/2}, where R is a substituted or unsubstituted monovalent hydrocarbon group, and/or siloxane units described by formula SiO_{4/2} in a molecule, and
(E) organic peroxide or organohydrogenpolysiloxane containing 3 or more silicon-bonded hydrogen atoms in a molecule in an amount sufficient to cure the silicone rubber composition.

20. A silicone rubber-coated synthetic fiber cloth according to Claim 19, where the silicone rubber composition further comprises 0.1 to 50 parts by weight carbon black per 100 parts of constituent (A).

21. A silicone rubber coated synthetic fiber coated cloth according to Claim 19, where the synthetic fiber cloth is selected from a group consisting of polyester fiber and polyamide fiber.
